# EUROPEAN PATENT SPECIFICATION

(11) **EP 4 380 773 B1**
(45) Date of publication and mention of the grant of the patent: **09.07.2025**
(21) Application number: 22747132.3
(22) Date of filing: 28.07.2022
(51) Int. Cl.: B29B 17/02, B09B 3/00, B09B 3/40

(54) **PROCESS FOR THE RECOVERY OF RAW MATERIAL FROM WASTE PRODUCTS**
VERFAHREN ZUR WIEDERGEWINNUNG VON ROHMATERIAL AUS ABFALLPRODUKTEN
PROCÉDÉ POUR RÉCUPÉRER UN MATÉRIAU BRUT À PARTIR DE DÉCHETS

(30) Priority: 03.08.2021 IT 202100020918
(43) Date of publication of application: 12.06.2024
(73) Proprietor: Ferram Recycling S.r.l., 05100 Terni (IT)
(72) Inventor: MANGONI, Andrea, 05100 Terni (TR) (IT); MARINI, Alessandro, 05100 Terni (TR) (IT); FERRETTI, Flavio, 05100 Terni (TR) (IT); NIGRELLI, Luigi, 05100 Terni (TR) (IT)
(74) Representative: Brunacci, Marco
(86) International application number: PCT/IB2022/057004
(87) International publication number: WO 2023/012614

(56) References cited:
- WO-A1-2017/141203

## Description

### Technical Field

The present invention relates to a process for the recovery of raw material from waste products.

### Background Art

The problem of recycling waste products, such as, e.g., end-of-life tires, ELT for short, and end-of-life hydraulic pipes, is nowadays increasingly felt.

In fact, these products contain significant amounts of materials within them of considerable technical importance, justifying the increasingly widespread interest in the industrial sector concerning their recovery.

If this were not done, in fact, the waste products would be destined for landfill, and their constituent materials could in no way be recovered and used for subsequent technical applications.

In this regard, the recovery of the three main components of ELTs, namely textile fibers, rubber and steel, is of particular interest.

Suffice it to say, in fact, that the former are reused for a plurality of different purposes, such as e.g., as additives for drainage asphalts, as fillers and reinforcing agents made of composite materials, and as components within the production of thermo-insulating panels while the latter is typically intended for the preparation of mixtures for road infrastructure, the filling of soundproofing panels and the plugging of synthetic turf fields and more.

Similarly, the need for recovery of the steel found in ELTs is well known.

This material, typically shaped as filaments inserted inside the tire, is used for mainly structural purposes, thus giving shape and strength to the tire itself.

To fulfill these functions, the type of steel typically selected has particularly advantageous mechanical properties, such as shape memory, marked hardness due to its high carbon content and high yield strength, which gives it considerable elastic deformability.

By virtue of the aforementioned characteristics, and taking into account its most common applications, such as in springs, spring clips, musical instrument strings and other products still, such steel has been given the attribute of "harmonic".

Techniques aimed at recovering, at least partly, the harmonic steel present within ELTs, such as, e.g., tire shredding techniques, are also known.

Nevertheless, the steel thus made is polluted by excessively high percentages of textile and rubber fibers adhered thereto, which can amount to 24% or more of the total weight.

Not only that, but steel made by such techniques comes in the form of inconvenient skeins of filaments that are difficult to reuse in subsequent machining and of little economic value.

Given these considerations, it is not surprising that steel made from ELTs is, by law, considered a waste with EWC code 19.12.02.

A wide range of processes for the recovery of raw material from waste products is now known, aimed in particular, at making harmonic steel from ELTs reusable for future jobs.

For example, processes are known to be used comprising heat treatments designed to oxidize and destroy pollutant components which contaminate harmonic steel and deprive the latter of its typical mechanical properties.

Such treatment is typically carried out by placing the skeins inside air-heated chambers such as, e.g., in rotary furnaces of the drum type, wherein the steel is annealed by high temperatures and rubber and textile fiber residues are burnt and then removed from the latter.

In particular, these technical effects arose as a result of the synergy between heat transfer by convection, in which heat is transferred to the skeins by the hot air lapping them, heat transfer by radiation, in which heat is transferred to the skeins by radiative exchange with the hot parts of the chamber or among the skeins themselves, and heat transfer by conduction, in which heat is transferred to the skeins by the direct contact of the latter with the hot parts of the chamber. Next, the skeins are cooled down and subjected to post-treatments of the mechanical type, such as pressing to form blocks.

The process just described, however, has important drawbacks, related, in particular, to the high operating costs of the furnaces, the lack of homogeneity of temperature between one skein and the other, and the limited control over the variation in heat output from the furnace itself.

Moreover, just from the type of combustion process, significant amounts of gases and fumes containing high percentages of PAHs, dioxins and other hazardous pollutants are emitted.

To at least partly overcome the aforementioned drawbacks of the prior art, processes for the recovery of raw material from waste products in accordance with the teachings of patent document ITUB20160894 are also known.

Specifically, according to the process described therein, the skeins are placed inside an electromagnetic induction furnace which allows the latter to be heated directly by the Joule effect, specifically through the application of eddy electric currents induced by rapid changes in the magnetic field.

In this case, therefore, there is no need to maintain a constant temperature inside the furnace.

The induction furnace, moreover, allows for an operation of the "pulsating" type which, compared to rotary furnaces, allows for both varying the heat output on demand and averting the occurrence of problems related to thermal expansion of materials, such as cracks in refractory materials and wear and tear, while saving, moreover, on the amount of energy required.

Following the heat treatment phase, the skeins undergo a screening phase to trace any residual material such as, e.g., ash or other solid products and, finally, undergo mechanical compaction post-treatment through hydro-pneumatic compaction equipment.

Patent document ITUB20160894 teaches, in particular, how to heat skeins at temperatures comprised in the range from 800 °C to 950 °C, that is, in such a way so as to oxidize the non-ferrous fraction adhered to steel, especially textile fibers and rubber.

In this regard, in order to cope with the products of their oxidation, the aforementioned patent describes means of venting the flue gases to the atmosphere and means of treating the pollutants dispersed therein, which are necessary to limit the pH and temperatures within threshold values set by current regulations.

It seems, however, clear that even this type of process is flawed by drawbacks and, therefore, susceptible to further improvement.

In the present case, the high intensity of eddy electric currents induced by the induction furnace, which is necessary for the total combustion of steel pollutants, requires inconveniently high amounts of energy to be maintained over time, thus excessively increasing the costs associated with the heat treatment of skeins.

What is more, having to provide means of venting the flue gases to the atmosphere and related means of treating the pollutants turns out to be an economically burdensome plant solution, both in terms of initial costs of installation and the subsequent costs of operation, management and periodic maintenance.

A further drawback of the patent document ITUB20160894 consists in the fact that the release of pollutants into the atmosphere is a major obstacle towards compliance with today's increasingly stringent environmental regulations.

In fact, taking into account the severity of the latter, there is an increasing need for a process for the recovery of raw material from waste products that does not involve the emission of pollutants into the atmosphere, in order to avoid incurring even very heavy fines.

WO2017/141203A1 discloses a further known prior art.

### Description of the Invention

The main aim of the present invention is to devise a process for the recovery of raw material from waste products which enables flexible, cost-effective and quality-competitive production while complying with current environmental regulations.

One object of the present invention is to devise a process for the recovery of raw material from waste products which allows improving the quality and purity of the raw material obtained.

A further object of the present invention is to devise a process for the recovery of raw material from waste products which can overcome the aforementioned drawbacks of the prior art within the framework of a simple, rational, easy and effective to use, as well as affordable solution.

The aforementioned objects are achieved by this process for the recovery of raw material from waste products having the characteristics of claim 1.

### Brief Description of the Drawings

Other characteristics and advantages of the present invention will become more apparent from the description of a preferred, but not exclusive, embodiment of a process for the recovery of raw material from waste products, illustrated by way of an indicative, yet non-limiting example, in the attached table of drawings in which:

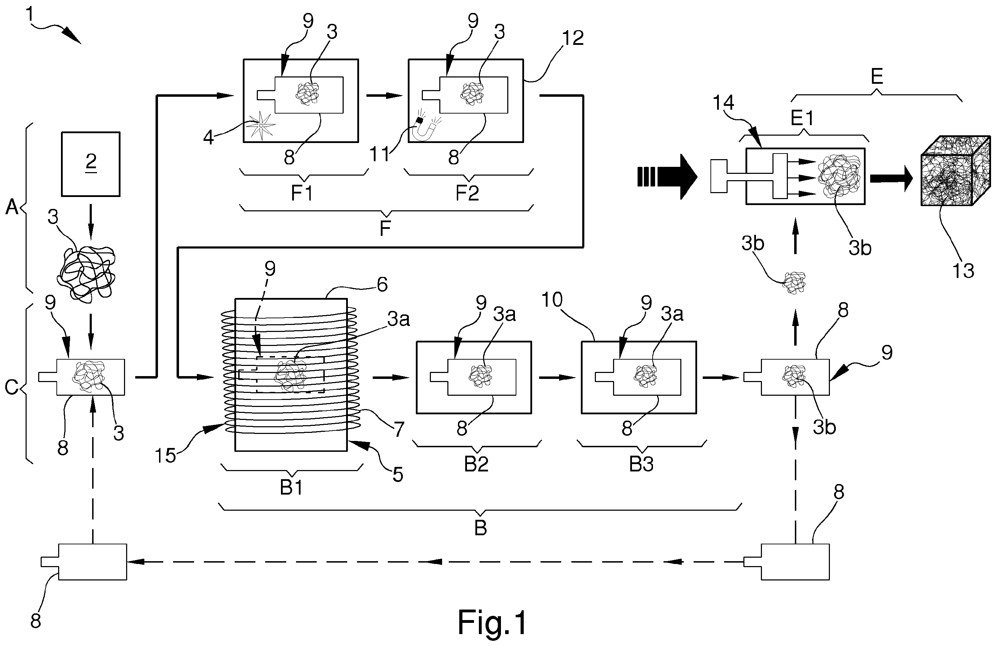

Figure 1 is a schematic illustration of the process according to the invention.

### Embodiments of the Invention

With particular reference to these figures, reference numeral 1 globally indicates a process for the recovery of raw material from waste products.

The process 1 comprises the supply A at least one skein (conventional term for ELT-derived steel) to be treated 3 derived from waste products and composed of at least one harmonic steel fraction and of a non-ferrous fraction.

The waste material, preferably ELTs and hydraulic tubes, is derived from a series of transformation processes, illustratively shown with reference number 2, placed upstream of the process 1.

Such transformation processes 2 comprise phases of shredding, bead-breaking, and the like, adapted to separate harmonic steel wires from the rest of the waste material.

The obtained wires, which cannot be used as such because of the stiffness and shape memory properties typical of harmonic steel and because of the high amounts of residual rubber and textile fibers, are prepared to form a pre-treated skein 3a.

Alternative solutions cannot be ruled out involving the use of different transformation processes aimed at obtaining harmonic steel from waste materials, as long as it is possible to prepare the obtained harmonic steel in skeins to be treated.

In addition, the process 1 comprises a phase of pre-treatment F of the skein to be treated 3 to separate the harmonic steel fraction from the non-ferrous fraction to obtain at least one pre-treated skein 3a.

According to the invention, the phase of pre-treatment F comprises at least one step of mechanical separation F1 of the harmonic steel fraction from the non-ferrous fraction.

In particular, the phase of mechanical separation F1 is carried out by shredding means 4 and allows the almost complete separation of the non-ferrous fraction from the harmonic steel fraction.

In this regard, it should be specified that the non-ferrous fraction comprises at least one part made of polymeric material and at least one part made of textile fibers.

The shredding means 4 are, e.g., of the type of a knife mill.

In this regard, the shredding means 4 are provided with at least one rotary cutting element for shredding the skein to be treated 3.

Conveniently, the shredding means 4 are provided with screening elements adapted to separate the skein to be treated 3 shredded according to the size of the fragments obtained.

Specifically, the screening elements are of the type of sieves provided with a plurality of openings having a predefined diameter.

In this regard, the time required to perform the step of mechanical separation F1 is inversely proportional to the characteristic diameter of the sieve openings.

In other words, the larger the characteristic diameter of the sieve openings, the shorter the time required to carry out the step of mechanical separation F1.

Advantageously, the phase of pre-treatment F comprises at least one step of magnetic separation F2 of the harmonic steel fraction from the non-ferrous fraction carried out through magnetic attraction means 11 adapted to separate at least in part the non-ferrous fraction from the harmonic steel fraction.

Specifically, to implement the phase of magnetic separation F2, the skein to be treated 3 is arranged in a dedicated magnetic separation area 12, where the magnetic separation means 11 are located.

Thus, the magnetic field generated by the magnetic separation means 11 entirely covers the skein to be treated 3, by separating by magnetic attraction the harmonic steel fraction, which remains adhered on the magnetic separation means themselves, from the non-metallic fraction.

According to a preferred embodiment, the step of magnetic separation F2 is carried out subsequently to the step of mechanical separation F1.

In fact, due to the effect of the shredding means 4, it is possible to shred the skein to be treated 3, thus reducing the size of the non-metallic fraction and allowing the magnetic attraction means 11 to efficiently separate the harmonic steel fraction from the remaining non-metallic fraction.

At the end of the phase of pre-treatment F, therefore, it is possible to obtain a pre-treated skein 3a with a degree of cleanliness and purity not below 98% by weight.

In addition, the process 1 comprises a phase of heat treatment B of the pre-treated skein 3a to obtain at least one treated skein 3b.

In more detail, the phase of heat treatment B comprises a step of inductive exposure B1 of the pre-treated skein 3a to at least one time-varying magnetic field for the induction of eddy electric currents in the pre-treated skein 3a, the step of inductive exposure B1 being adapted to raise the temperature of the pre-treated skein 3a to at least one working temperature.

The eddy currents, in fact, are adapted to raise the temperature of the pre-treated skein 3a, by heating the metal material involved.

The metal mass involved, in particular, when subjected to alternating magnetic fields, develops electric current flows therein induced by the change in magnetic fields, resulting in the production of heat by the Joule effect.

Heat production is quantifiable for a known amount of pre-treated skein 3a because it is proportional to the intensity of the electric current flowing in the pre-treated skein 3a, with the current intensity itself being proportional to the intensity of the variation in the magnetic fields.

According to the invention, the working temperature is substantially lower than 800 °C.

More specifically, the working temperature is comprised between 450 °C and 650 °C.

Preferably, the working temperature is 550 °C.

Working at that temperature range, in fact, the steel loses the stiffness and shape memory characteristics typical of harmonic steel.

Preferably, the step of inductive exposure B1 is carried out for a time range from 25 minutes to 5 minutes, even better from 20 minutes to 10 minutes, preferably equal to 15 minutes.

Conveniently, the step of inductive exposure B1 is carried out inside at least one electromagnetic induction furnace 5 provided with induction heating means 15 of the pre-treated skein 3a.

Specifically, the induction furnace 5, schematically shown in Figure 1, is provided with a loading chamber 6, adapted to receive the pre-treated skein 3a.

In more detail, the induction heating means 15 comprise a plurality of coils 7 surrounding the loading chamber 6 and which are intended to be traversed by electric currents for the induction of alternating magnetic fields within the loading chamber itself.

A furnace of this type allows for "pulsating operation", that is, it allows the power to be varied at will without affecting the durability and smooth operation of the parts involved.

Advantageously, the process 1 comprises a phase of loading C of the pre-treated skein 3a onto at least one supporting element 8 made of a material insensitive to magnetic fields to form a treatment assembly 9 to be subjected to the step of inductive exposure B1.

The supporting element 8, illustrated as an example, is of the type of a ceramic tray and thus is not subject to the effect of alternating magnetic fields.

Such a solution allows the pre-treated skein 3a to be fitted into and out of the induction furnace 5.

One or more supporting elements 8 may be used.

The use of different supporting elements 8 cannot be not ruled out, as long as they are not affected by the inductive effect of the magnetic fields.

Types of continuous loading of the induction furnace 5 by conveyor belts, nor types of unloading from the induction furnace itself by tipping the conveyor belts, cannot also be ruled out.

Advantageously, the phase of heat treatment comprises the step of heating B1 the pre-treated skein, the step of heating B1 being adapted to raise the temperature of the pre-treated skein 3a to the working temperature.

According to a preferred embodiment, the step of heating B1 coincides with the step of inductive exposure B1.

Alternatively, the step of heating B1 can take place prior to the introduction of the pre-treated skein 3a into the induction furnace 5.

In such a case, heating would take place externally to the induction furnace 5, during the phase of loading C or immediately afterwards.

Next, the heat treatment B involves a step of maintaining B2 the working temperature of the pre-treated skein 3a.

Specifically, the step of maintaining B2 lasts between 8 and 12 minutes, even better between 9 and 11 minutes, preferably equal to 10 minutes.

Conveniently, the step of maintaining B2 occurs entirely inside the induction furnace 5.

Finally, the phase of heat treatment B ends up with a step of cooling B3 of the pre-treated skein 3a which has been previously heated to the working temperature.

In particular, the step of cooling B3 lasts longer than the phase of maintaining.

In this way, the step of cooling B3 takes place in a prolonged and gradual manner, in order to avoid the occurrence of thermal quenching processes that would nullify the ductility imparted to the metal mass with the cancellation of the harmonicity characteristic.

Advantageously, the step of cooling B3 is carried out in a cooling chamber 10, schematically shown in Figure 1, provided with means for gradual cooling of the pre-treated skein 3a.

Conveniently, the cooling chamber 10 allows the pre-treated skein 3a to be cooled in still air, thus avoiding sharp temperature drops, which would prove detrimental to the final characteristics of the reusable steel.

At the end of the phase of heat treatment B, therefore, a treated skein 3b can be obtained.

It is emphasized in this regard that, given the purity of the pre-treated skein 3a, the phase of heat treatment B produces a negligible amount of harmful substances and is, therefore, in accordance with the latest environmental regulations.

Finally, the process 1 comprises a post-treatment E of the treated skein 3b to obtain reusable steel 13 as raw material.

Next, the post-treatment E comprises a step of compaction E1 of the treated skein 3b carried out by hydro-pneumatic or hydraulic compaction means 14, schematically shown in Figure 1.

In fact, the treated skein 3b, as a result of the heat treatment B, no longer possesses the characteristics of high stiffness and shape memory, and can be worked into shapes and pieces suitable for its use.

The step of compaction E1, for example, allows the treated skein 3b to be compacted into blocks of reusable steel 13 as raw material in steel mill melting furnaces.

Different processes cannot be ruled out aimed at obtaining reusable steel 13 with different shapes and sizes, including, for example, additional steps to the steps of compaction E1.

It has in practice been ascertained that the described invention achieves the intended objects, and in particular the fact is emphasized that the process for the recovery of raw material from waste material allows for both economically and environmentally sustainable production.

In this regard, in fact, it should be considered that the phase of pre-treatment allows the non-metallic fraction to be separated from the harmonic steel fraction without the use of high environmental impact technologies, such as, e.g., the use of furnaces.

By doing so, among other things, the process does not require complex and/or excessively expensive plant solutions for the removal of any combustion fumes. Not only that, but the process according to the invention also makes it possible, precisely because of the presence of the pre-treatment phase, to reduce the working temperature to a value only determined by the elimination of the harmonicity properties of steel and not by the much higher temperatures necessary for the combustion of the textile fibers and polymer material.

## Claims

1. Process (1) for the recovery of raw material from waste products, comprising at least the phases of:
- supply (A) of at least one skein to be treated (3) derived from waste products and composed of at least a harmonic steel fraction and a non-ferrous fraction;
- pre-treatment (F) of said skein to be treated (3) to separate said harmonic steel fraction from said non-ferrous fraction to obtain at least one treated skein (3b);
- heat treatment (B) of said pre-treated skein (3a) to obtain at least one treated skein (3b), said phase of heat treatment (B) comprising a step of inductive exposure (B1) of said pre-treated skein (3a) to at least one time-varying magnetic field for the induction of eddy electric currents in said pre-treated skein (3a), said step of inductive exposure (B1) being adapted to raise the temperature of said pre-treated skein (3a) to at least one working temperature;
- post-treatment (E) of said treated skein (3b) to obtain steel reusable as raw material;
**characterized by** the fact that said working temperature is substantially below 800 °C and by the fact that said phase of pre-treatment (F) comprises at least one step of mechanical separation (F1) of said harmonic steel fraction from said non-ferrous fraction.

2. Process (1) according to claim 1, **characterized by** the fact that said working temperature is comprised between 450 °C and 650 °C.

3. Process (1) according to one or more of the preceding claims, **characterized by** the fact that said non-ferrous fraction comprises at least one part made of polymeric material and at least one part made of textile fibers.

4. Process (1) according to one or more of the preceding claims, **characterized by** the fact that said phase of mechanical separation (F1) is carried out through shredding means (4).

5. Process (1) according to one or more of the preceding claims, **characterized by** the fact that said phase of pre-treatment (F) comprises at least one step of magnetic separation (F2) of said harmonic steel fraction from said non-ferrous fraction carried out through magnetic attraction means (11) adapted to separate at least in part said non-ferrous fraction from said harmonic steel fraction.

6. Process (1) according to one or more of the preceding claims, **characterized by** the fact that said step of magnetic separation (F2) is carried out subsequently to said step of mechanical separation (F1).

7. Process (1) according to one or more of the preceding claims, **characterized by** the fact that said step of inductive exposure (B1) is carried out inside at least one electromagnetic induction furnace (5) provided with induction heating means (15) of said pre-treated skein (3a).

8. Process (1) according to one or more of the preceding claims, **characterized by** the fact that said phase of heat treatment (B) comprises at least the steps of:
- heating (B1) said pre-treated skein, said step of heating being adapted to raise the temperature of said pre-treated skein to said working temperature;
- maintaining (B2) the working temperature of said pre-treated skein (3a);
- cooling (B3) said previously heated pre-treated skein (3a) to said working temperature.

9. Process (1) according to one or more of the preceding claims, **characterized by** the fact that said step of cooling (B3) lasts longer than said step of maintaining (B2).

10. Process (1) according to one or more of the preceding claims, **characterized by** the fact that said phase of post-treatment (E) comprises a phase of compaction (E1) of said treated skein (3b) carried out by hydro-pneumatic or hydraulic compaction means (14).

## Patentansprüche

1. Verfahren (1) zur Rückgewinnung von Rohmaterial aus Abfallprodukten, das mindestens die folgenden Phasen umfasst:
- Zufuhr (A) mindestens eines zu behandelnden Strangs (3), der aus Abfallprodukten gewonnen wurde und aus mindestens einer harmonischen Stahlfraktion und einer Nichteisenfraktion besteht;
- Vorbehandlung (F) des zu behandelnden Strangs (3), um die harmonische Stahlfraktion von der Nichteisenfraktion zu trennen und mindestens einen behandelten Strang (3b) zu erhalten;
- Wärmebehandlung (B) des vorbehandelten Strangs (3a), um mindestens einen behandelten Strang (3b) zu erhalten, wobei die Phase der Wärmebehandlung (B) einen Schritt der induktiven Beaufschlagung (B1) des vorbehandelten Strangs (3a) mit mindestens einem zeitlich veränderlichen Magnetfeld zur Induktion von elektrischen Wirbelströmen in dem vorbehandelten Strang (3a) umfasst, wobei der Schritt der induktiven Beaufschlagung (B1) ausgebildet ist, die Temperatur des vorbehandelten Strangs (3a) auf mindestens eine Arbeitstemperatur zu erhöhen;
- Nachbehandlung (E) des behandelten Strangs (3b), um Stahl zu erhalten, der als Rohmaterial wiederverwendbar ist;
**dadurch gekennzeichnet, dass** die Arbeitstemperatur im Wesentlichen unter 800 °C liegt und dass die Phase der Vorbehandlung (F) mindestens einen Schritt einer mechanischen Trennung (F1) der harmonischen Stahlfraktion von der Nichteisenfraktion umfasst.

2. Verfahren (1) gemäß Anspruch 1, **dadurch gekennzeichnet, dass** die Arbeitstemperatur zwischen 450 °C und 650 °C liegt.

3. Verfahren (1) gemäß einem oder mehreren der vorstehenden Ansprüche, **dadurch gekennzeichnet, dass** die Nichteisenfraktion mindestens einen Teil aus Polymermaterial und mindestens einen Teil aus Textilfasern umfasst.

4. Verfahren (1) gemäß einem oder mehreren der vorstehenden Ansprüche, **dadurch gekennzeichnet, dass** die Phase der mechanischen Trennung (F1) durch Zerkleinerungsmittel (4) durchgeführt wird.

5. Verfahren (1) gemäß einem oder mehreren der vorhergehenden Ansprüche, **dadurch gekennzeichnet, dass** die Phase der Vorbehandlung (F) mindestens einen Schritt einer magnetischen Trennung (F2) der harmonischen Stahlfraktion von der Nichteisenfraktion umfasst, der durch magnetische Anziehungsmittel (11) ausgeführt wird, die ausgebildet sind, die Nichteisenfraktion mindestens teilweise von der harmonischen Stahlfraktion zu trennen.

6. Verfahren (1) gemäß einem oder mehreren der vorhergehenden Ansprüche, **dadurch gekennzeichnet, dass** der Schritt der magnetischen Trennung (F2) nach dem Schritt der mechanischen Trennung (F1) durchgeführt wird.

7. Verfahren (1) gemäß einem oder mehreren der vorhergehenden Ansprüche, **dadurch gekennzeichnet, dass** der Schritt der induktiven Beaufschlagung (B1) in mindestens einem elektromagnetischen Induktionsofen (5) durchgeführt wird, der mit Induktionsheizmitteln (15) für den vorbehandelten Strang (3a) ausgestattet ist.

8. Verfahren (1) nach einem oder mehreren der vorhergehenden Ansprüche, **dadurch gekennzeichnet, dass** die Phase der Wärmebehandlung (B) mindestens die folgenden Schritte umfasst:
- Erhitzen (B1) des vorbehandelten Strangs, wobei der Schritt des Erhitzens ausgebildet ist, die Temperatur des vorbehandelten Strangs auf die Arbeitstemperatur zu erhöhen;
- Aufrechterhalten (B2) der Arbeitstemperatur des vorbehandelten Strangs (3a);
- Abkühlen (B3) des zuvor erhitzten vorbehandelten Strangs (3a) auf die Arbeitstemperatur.

9. Verfahren (1) gemäß einem oder mehreren der vorhergehenden Ansprüche, **dadurch gekennzeichnet, dass** der Schritt des Abkühlens (B3) länger dauert als der Schritt des Aufrechterhaltens (B2).

10. Verfahren (1) gemäß einem oder mehreren der vorhergehenden Ansprüche, **dadurch gekennzeichnet, dass** die Phase der Nachbehandlung (E) eine Phase einer Verdichtung (E1) des behandelten Strangs (3b) umfasst, die durch hydropneumatische oder hydraulische Verdichtungsmittel (14) durchgeführt wird.

## Revendications

1. - Procédé (1) de récupération de matière première à partir de produits de rebut, comprenant au moins les phases suivantes :
- fourniture (A) d'au moins un écheveau à traiter (3) issu de produits de rebut et composé d'au moins une fraction d'acier harmonique et d'une fraction non ferreuse ;
- prétraitement (F) dudit écheveau à traiter (3) pour séparer ladite fraction d'acier harmonique de ladite fraction non ferreuse afin d'obtenir au moins un écheveau traité (3b) ;
- traitement thermique (B) dudit écheveau prétraité (3a) pour obtenir au moins un écheveau traité (3b), ladite phase de traitement thermique (B) comprenant une étape d'exposition inductive (B1) dudit écheveau prétraité (3a) à au moins un champ magnétique variant dans le temps pour l'induction de courants électriques de Foucault dans ledit écheveau prétraité (3a), ladite étape d'exposition inductive (B1) étant apte à élever la température dudit écheveau prétraité (3a) à au moins une température de travail ;
- post-traitement (E) dudit écheveau traité (3b) pour obtenir un acier réutilisable comme matière première ;
**caractérisé par le fait que** ladite température de travail est sensiblement inférieure à 800°C, et **par le fait que** ladite phase de prétraitement (F) comprend au moins une étape de séparation mécanique (F1) de ladite fraction d'acier harmonique de ladite fraction non ferreuse.

2. - Procédé (1) selon la revendication 1, **caractérisé par le fait que** ladite température de travail est comprise entre 450°C et 650°C.

3. - Procédé (1) selon une ou plusieurs des revendications précédentes, **caractérisé par le fait que** ladite fraction non ferreuse comprend au moins une partie constituée de matériau polymère et au moins une partie constituée de fibres textiles.

4. - Procédé (1) selon une ou plusieurs des revendications précédentes, **caractérisé par le fait que** ladite phase de séparation mécanique (F1) est effectuée par des moyens de déchiquetage (4).

5. - Procédé (1) selon une ou plusieurs des revendications précédentes, **caractérisé par le fait que** ladite phase de prétraitement (F) comprend au moins une étape de séparation magnétique (F2) de ladite fraction d'acier harmonique de ladite fraction non ferreuse effectuée par des moyens d'attraction magnétique (11) aptes à séparer au moins en partie ladite fraction non ferreuse de ladite fraction d'acier harmonique.

6. - Procédé (1) selon une ou plusieurs des revendications précédentes, **caractérisé par le fait que** ladite étape de séparation magnétique (F2) est effectuée postérieurement à ladite étape de séparation mécanique (F1).

7. - Procédé (1) selon une ou plusieurs des revendications précédentes, **caractérisé par le fait que** ladite étape d'exposition inductive (B1) est effectuée à l'intérieur d'au moins un four à induction électromagnétique (5) comportant des moyens de chauffage par induction (15) dudit écheveau prétraité (3a).

8. - Procédé (1) selon une ou plusieurs des revendications précédentes, **caractérisé par le fait que** ladite phase de traitement thermique (B) comprend au moins les étapes de :
- chauffage (B1) dudit écheveau prétraité, ladite étape de chauffage étant apte à élever la température dudit écheveau prétraité à ladite température de travail ;
- maintien (B2) de la température de travail dudit écheveau prétraité (3a) ;
- refroidissement (B3) dudit écheveau prétraité (3a) précédemment chauffé à ladite température de travail.

9. - Procédé (1) selon une ou plusieurs des revendications précédentes, **caractérisé par le fait que** ladite étape de refroidissement (B3) dure plus longtemps que ladite étape de maintien (B2).

10. - Procédé (1) selon une ou plusieurs des revendications précédentes, **caractérisé par le fait que** ladite phase de post-traitement (E) comprend une phase de compactage (E1) dudit écheveau traité (3b) effectuée par des moyens de compactage hydro-pneumatiques ou hydrauliques (14).
